# EUROPÄISCHE PATENTSCHRIFT

(11) **EP 0 833 743 B1**
(45) Veröffentlichungstag und Bekanntmachung des Hinweises auf die Patenterteilung: **15.09.1999**
(21) Anmeldenummer: 96921867.6
(22) Anmeldetag: 18.06.1996
(51) Int. Cl.: B30B 11/24, B29C 47/60

(54) **ZWEIWELLEN-KOMPAKTVERDICHTER**
TWIN-SHAFT COMPACTOR
COMPRESSEUR DE COMPACTAGE A DEUX ARBRES

(30) Priorität: 19.06.1995 DE 19521560
(43) Veröffentlichungstag der Anmeldung: 08.04.1998
(73) Patentinhaber: Svedala Lindemann GmbH, 40231 Düsseldorf (DE)
(72) Erfinder: LANGENBECK, Konrad, D-70839 Gerlingen (DE); GRATZ, Matthias, D-73732 Esslingen (DE); HAAS, Alexander, D-76571 Gaggenau (DE); VAN DER BEEK, August, D-41515 Grevenbroich (DE); DILLMANN, Jürgen, D-70180 Stuttgart (DE); BUCH, Reyk, D-53177 Bonn (DE); SCHÜRMANN, Hermann, Josef, D-46487 Wesel (DE)
(86) Internationale Anmeldenummer: DE9601071
(87) Internationale Veröffentlichungsnummer: WO9700166

(56) Entgegenhaltungen:
- EP-A- 0 132 525
- EP-A- 0 319 779
- WO-A-86/02313
- DE-A- 2 924 462
- DE-A- 3 714 509
- DE-C- 836 916

## Beschreibung

### Technisches Gebiet

Die Erfindung betrifft eine Einrichtung zur Volumenreduzierung und hochverdichteten Kompaktierung von Abfällen unterschiedlicher Zusammensetzung, insbesondere der Shredderleichtfraktion, die in Entstaubungsanlagen von Shredderanlagen anfällt, mittels einer Doppelschneckenpresse.

### Stand der Technik

Die aus den Shredderbetrieben anfallende Leichtfraktion, bestehend in erster Linie aus Kunststoff, Gummi, Textilien, Holz, Glas etc., läßt sich in zunehmendem Maße durch verschärfte Gesetzgebung nicht mehr kostengünstig, z.B. durch einfache Deponierung, entsorgen. Die Entsorgungskosten als Sondermüll betragen ein Vielfaches der bisherigen Kosten, so daß in Zukunft erhebliche Gebühren für die Sonderdeponierung zu zahlen wären, da der bisherige Erlös aus verkaufbaren Stoffen die Entsorgungsgebühren für die Shredderleichtfraktion nicht mehr decken würden.
Verschärft wird die Situation durch das geringe Schüttgewicht der Shredderleichtfraktion von ca. 200 kg/m³, die einen wirtschaftlichen Transport nicht mehr zuläßt. Die Shredderleichtfraktion besitzt jedoch einen sehr hohen Heizwert, von bis zu ca. 16.000 KJ/kg, so daß eine energetische Verwertung sinnvoll erscheint. Diese ist aber in der Praxis in loser Form der Shredderleichtfraktion kaum möglich. Für Transport und Zwischenlagerung dieser Fraktion sowie gezielte Zugabe als Brennstoff ist eine Kompaktierung zu handlichen und gut zusammenhaltenden Briketts eine Voraussetzung für jede weitere wirtschaftliche Nutzung der Shredderleichtfraktion.

Ermöglicht wird dies durch den Einsatz einer Doppelschneckenpresse mit zwei nebeneinander liegenden Schnecken, wie z.B. aus der EP 0 108 763 bereits bekannt.

Nachteilig sind hier
- das rein mechanische Getriebe zum Antrieb der Schneckenwellen, das eine stufenlose Drehzahlregelung der Schneckenwellen nicht zuläßt und eine Reversierung der Schneckendrehrichtung nur über ein teures und aufwendiges Schaltgetriebe, sowie
- die im Extrudergehäuse angeordneten Drosselscheiben, die bei Anstellung außer einer Verstärkung des Preßdruckes auch eine erheblich größere Zerfaserung (Pulverisierung) des Materials hervorrufen, was für den Zusammenhalt der Briketts nicht immer förderlich ist.

Stark angestellte Drosselscheiben lassen harte und gröbere Inhaltsstoffe im Preßgut, wie z.B. Steine, nicht passieren, obwohl diese sich in einem Brikett mit großem Durchmesser ohne weiteres integrieren würden, ohne den Brikettzusammenhalt zu gefährden.
Die Auswirkung der Ansteilung der Drosselscheiben auf den Brikettstrang bzw. auf die Briketts läßt sich optisch nicht direkt beobachten, vor allem nicht bei Einsatz mehrerer Drosselscheiben hintereinander. Dies ist vor allem beim Anfahren der Anlage sowie bei Material- und starkem Feuchtigkeitswechsel sehr nachteilig.

Der vorliegenden Erfindung liegt das Problem zugrunde, eine Brikettierung sehr heterogener Abfälle, insbesondere von Shredderleichtfraktion, ohne Zugabe von Bindemitteln und unter Vermeidung der vorgenannten Probleme mittels einer liegenden Doppelschneckenpresse durchzuführen, wobei eine Brikettdichte von 1.500 - 2.500 kg/m³ je nach Materialzusammensetzung erreicht werden soll.

### Darstellung der Erfindung

Die Erfindung stellt sich die Aufgabe, einen Zweiwellenkompaktverdichter in Form einer Extruderpresse oder sogenannten Doppelschneckenpresse zu schaffen, die aus einem Gehäuse und darin laufenden, nebeneinanderliegenden, angetriebenen Schneckenwellen, einem materialeintrittseitigen Aufgabebunker und einem material-austrittseitigen Brikettformer besteht, um eine Volumenreduzierung und hochverdichtete Kompaktierung von Abfällen unterschiedlicher Zusammensetzung zu brikettartigen Preßlingen, insbesondere zur Kompaktierung einer in Entstaubungsanlagen von Shredderanlagen anfallenden sogenannten Shredderleichtfraktion, zu ermöglichen und dabei vorteilhaft gegenüber den allgemein bekannten Doppelschneckenpressen den funktionellen und physikalischen Zusammenhang, wie Mitnahme und Durchmischen des mehr heterogenen Aufgabegutes, Zerreißen von Bestandteilen des Aufgabegutgemisches, maximaler Druckaufbau zum Pressen / Verdichten / Kompaktieren mit integrierter zwangsläufiger Trocknung und Strangbildung für einen inneren und äußeren Zusammenhalt des Preßlings zu erwirken.
Erfindungsgemäß wird dies mit den Merkmalen der Ansprüche 1 bis 21 gelöst.

### Kurze Beschreibung der Zeichnungen

In den Zeichnungen zeigen
- Fig. 1: die schematische Darstellung einer erfindungsgemäßen Doppelschneckenpresse in der Seitenansicht,
- Fig. 2: die Draufsicht aus der Ebene A - A nach Fig. 1,
- Fig. 3: die detaillierte Darstellung des Gehäuses der eigentlichen Doppelschneckenpresse im Schnitt und
- Fig. 4: die schematische Darstellung einer gattungsgemäßen Anlage als Draufsicht.

### Bester Weg zur Ausführung der Erfindung

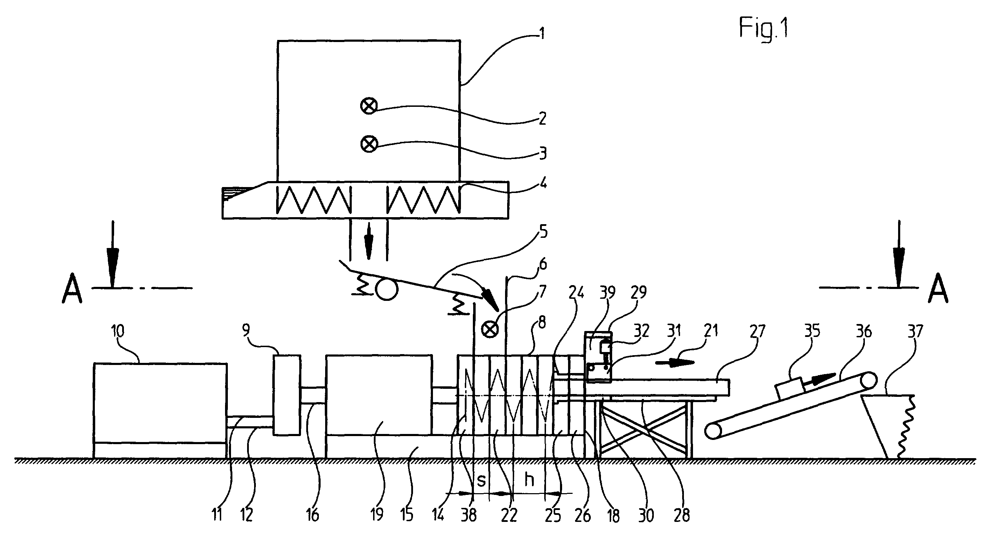

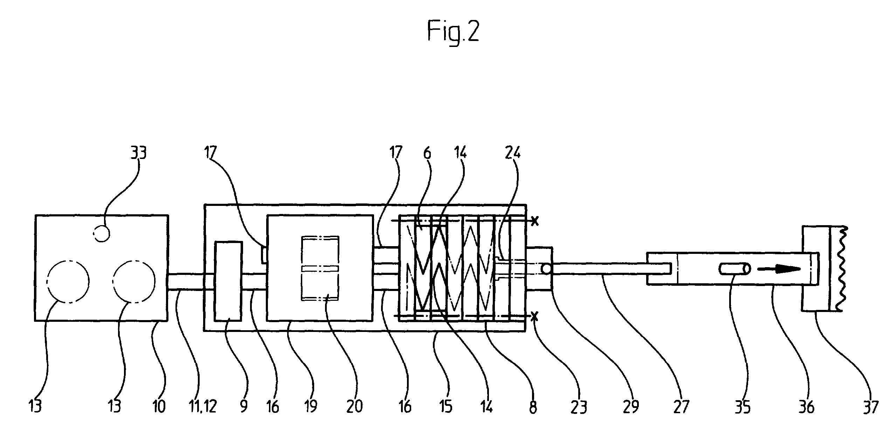

Gemäß den Fig. 1 und 2 wird als Aufgabegut eine heterogen zusammengesetzte Shredderleichtfrakton über ein Zuführband (nicht dargestellt) in einen Aufgabebunker 1 eingefüllt. Zumindest ein unterer Füllstandsmesser 3 muß angesprochen haben, ehe die Anlage in Betrieb gehen kann. Die Materialzuführung wird abgeschaltet, wenn die Füllhöhe einen oberen Füllstandsmesser 2 erreicht hat.
Der Materialaustrag aus dem Aufgabebunker 1 erfolgt mit Förderschnecken 4, die gegenläufig zur Mitte des Aufgabebunkers 1 hin arbeiten. Die Shredderleichtfraktion fällt hier auf eine Vibrationsrinne 5, die das Material verteilt in einen Füllschacht 6 der Doppelschneckenpresse 8 übergibt.
Die Füllhöhe im Füllschacht 6 wird von einer Füllstandsüberwachung 7 überwacht. Bei Unterschreitung dieser Füllhöhe erfolgt die Abschaltung eines Hydromotors 9. Der Hydromotor 9 wird von einer Hydraulikstation 10 mit Drucköl über Leitungen 11, 12 versorgt. Als Antrieb des Hydromotors 9 wird mindestens eine, im beschriebenen Fall zwei, fremdansteuerbare Verstellpumpe 13 eingesetzt, wodurch die Drehzahl des Hydromotors 9 und damit auch der Preßschnecken 14 bestimmt wird. Der Betriebsdruck der Verstellpumpen 13 ergibt sich aus dem von den beiden Schnecken 14 erzeugten Gegendruck und einem nachgeschalteten Brikettformer 29. Wird dabei der maximale Betriebsdruck überschritten, werden die Pumpen 13 ausgeschwenkt, wobei sich durch die verringerte Literleistung der Pumpen 13 eine Drehzahlverringerung des Hydromotors 9 und damit der Preßschnecken 14 einstellt. Eine Änderung der Drehrichtung des Hydromotors 9 für eine kurze Reversierung zur Lösung einer Verklemmung ist vorgesehen. Hierzu ist kein Schaltgetriebe erforderlich. Trotz stufenloser Drehzahlregelung des Hydromotors 9 bzw. der Schneckenwellen 16 und 17 mit den Preßschnecken 14 bleibt das Drehmoment konstant. Es ergibt sich für die gesamte Maschine eine schmale Bauart, da seitlich kein Getriebe übersteht.
Bei einem Zwei-Pumpenantrieb besteht die Möglichkeit, mit einer Verstellpumpe 13 und entsprechend halber Durchsatzleistung den Betrieb durchzuführen. Dies ist z.B. wichtig bei einer fahrbaren Einheit, wo das Stromnetz u.U. keine größere Leistung hergibt oder auch im Wartungsfall.

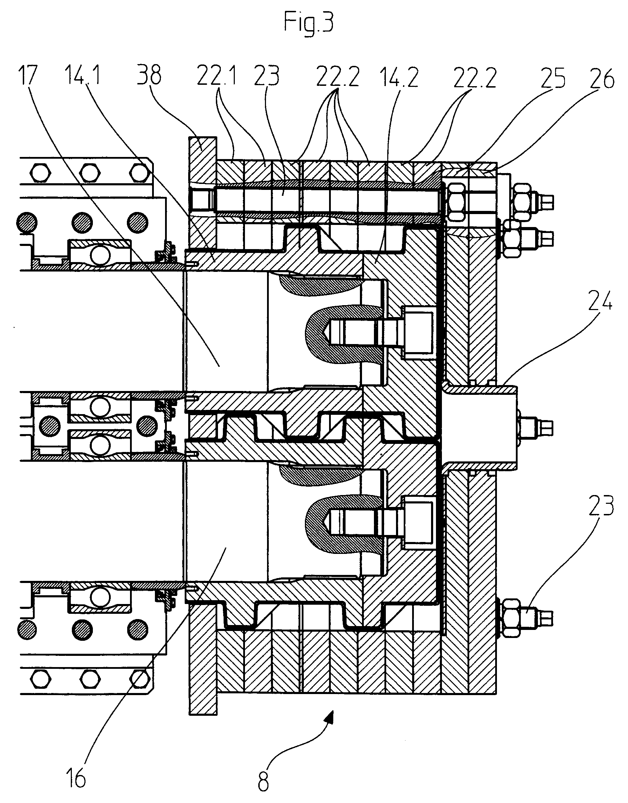

Der Hydromotor 9 ist auf der langen Schneckenwelle 16 montiert, die wie die kurze Schneckenwelle 17 bis an den Bereich des Austragsendes 18 bzw. der Frontplatte 25 der Doppelschneckenpresse 8 reicht.
Im Ritzel-Gehäuse 19 wird über ein Zahnradpaar 20 die Drehbewegung der langen Schneckenwelle 16 auf die kurze Schneckenwelle 17 im Verhältnis 1:1 gegenläufig übertragen. Im Ritzel-Gehäuse 19 sind auch alle Lagerungen zur Aufnahme der axialen und radialen Kräfte von den Schneckenwellen 16, 17 untergebracht.
Die Preßschnecken 14 sind entsprechend Fig. 3 als hohles Basisteil 14.1 ausgebildet und über die Länge geteilt. Ein Kopfteil 14.2 der Preßschnecke 14 übergreift auch die jeweilige Stirnseite der Schneckenwellen 16 und 17 und schützt diese vor Beschädigungen. Sowohl das Kopfteil 14.2 als auch das hohle Basisteil 14.1 sind leicht demontierbar. Beide Teile können je nach Verschleiß auch einzeln ausgetauscht werden. Die Schneckenwellen 16 und 17 kommen mit dem Preßmaterial nicht in Berührung und unterliegen damit keinem Verschleiß. Die Schneckenwendeln sind speziell gehärtet, um eine lange Lebensdauer zu erreichen. Das hohle Basisteil 14.1 und auch das Kopfteil 14.2 sind 2-gängig ausgeführt, um eine sichere und gleichmäßige Materialmitnahme aus dem Bereich des Füllschachtes 6 und eine gute Durchmischung des Preßgutes vor der Strangbildung und eine starke Zerreißwirkung auf das Preßgut zu erreichen, woraus ein besserer Zusammenhalt eines vom zu pressenden Strang 27 abgetrennten Briketts 35 resultiert.
Die Vorder- und Hinterflanken der Schneckenwendeln haben unterschiedliche Steigungen, so daß die Zahndicke der Wendeln über die Längsachse der Preßschnecken 14 zunimmt. Der Quetschspalt dazwischen verringert sich damit in Preßrichtung zum Austragsende hin, wodurch das dazwischen befindliche Material stark zerquetscht wird.
Das Gehäuse der Doppelschneckenpresse 8 besteht aus einzelnen dünnen Platten 22, 25, 26 und 38. Diese haben jeweils maximal eine Dicke entsprechend der Steigung der Preßschnecken 14, vorzugsweise jedoch wesentlich geringer. Hieraus ergeben sich eine Reihe von Vorteilen, die funktionell vorteilhaft in dem aufgabengemäß angestrebten Gesamteffekt verschmelzen, wie
- einfache Anpassung an die Innenkontur des Pressengehäuses der Doppelschneckenpresse 8,
- Möglichkeit des Wendens um 180° oder Versetzens oder einzelnen Austausches von Platten 22, 25, 26, 38 je nach Verschleiß,
- Anpassung des Plattenwerkstoffes an die Verschleißzone, wodurch sich eine bessere Werkstoffausnutzung und eine verringerte Stillstandszeit bei Wartungsarbeiten ergeben,
- leichte Variierung der Einfüllöffnung der Presse durch Plattenaustausch, wodurch die Einfüllmenge und das Nachrutschen des aufgegebenen Materials im Füllschacht 6 beeinflußt werden können,
- einfache Möglichkeit der Verlängerung oder Verkürzung des Gehäuses der Doppelschneckenpresse.

Die Platten 22, 25, 26, 38 werden durch Zuganker 23 in horizontaler Richtung zusammengehalten.

Wie in Fig. 3 dargestellt, unterscheiden sich die Platten 22 in aufgabeseitige Einfüllplatten 22.1 und Platten 22.2, die den Kompaktierungsraum des Gehäuses bilden. Eine Austrittsbuchse 24 ist in den beiden Frontplatten 25, 26 der Doppelschneckenpresse 8 etwas über der horizontalen Mitte der Schneckenwellen 16 und 17 mittig angeordnet. Die Austrittsbuchse 24 besteht aus hochverschleißfestem Spezialstahl und ist schnell auswechselbar. Die Frontplatten 25 und 26 werden entsprechend geschont. Durch Austausch der Austrittsbuchse 24 kann der Brikettdurchmesser und auch die Brikettform auf einfache Weise verändert werden.
Bei Austausch der Frontplatten 25 und 26 kann die Lage der Austrittsbuchse 24 im Verhältnis zu den Lagen der Schneckenwellen 16 und 17 verändert weden. Es ergibt sich dadurch eine grundsätzliche Veränderung des Gegendruckes und der Materialvermischung im Gehäuse der Doppelschneckenpresse 8.

Nach Austritt des gepreßten Stranges 27 aus der Austrittsbuchse 24 gelangt dieser auf eine natürliche Kühlstrecke 28 und damit auch direkt in einen Brikettformer 29, der sich an die Frontplatte 26 anschließt. Der Brikettformer 29 erzeugt den notwendigen und regelbaren Anteil des Gegendruckes im ausgestoßenen Strang 27, um dessen Zusammenhalt und eine hohe Dichte nach Abkühlung und Aufteilung in einzelne Briketts 35 zu erreichen. Die Auswirkung des Brikettformers 29 auf die Strang- bzw. Brikettdichte und dessen Zusammenhalt ist optisch, insbesondere auch bei Anfahrprozessen, gut beobachtbar. Eine untere Matrize 30 des Brikettformers 29 steht still, während die der Frontplatte 26 zugewandte Seite einer oberen Matrize 31 auf dieser Seite angelenkt und auf der anderen Seite mit einem Hydraulikzylinder 32 verbunden ist, der sich am Gehäuse 39 des Brikettformers 29 abstützt. Der Hydraulikzylinder 32 ist mit einem separaten, ständig laufendem Pumpenantrieb 33 verbunden. Über nicht dargestellte Steuerschieber kann die obere Matrize 31 auf- oder abwärts gefahren werden, wodurch der Gegendruck auf den gepreßten Strang 27 zu- oder abnimmt. Anstelle des ständig laufenden Pumpenantriebes 33 ist auch ein Druckspeicher einsetzbar, so daß der Pumpenantrieb 33 nicht ständig laufen muß.

Am Ende der Kühlstrecke 28 hängt der gepreßte Strang 27 frei in der Luft bis er durch Eigengewicht abbricht und als einzelnes Brikett 35 auf ein Transportband 36 herunterfällt, von dem es in einen Container 37 abgeworfen wird. Somit erübrigt sich eine spezielle Strangtrennvorrichtung.

Das Transportband 36 ist so lang ausgeführt, daß die notwendige Abkühlung gewährleistet ist.
Sollte eine exakte Brikettlänge verlangt werden, so ist am Ende der Kühlstrecke 28 eine nicht dargestellte Strangtrennvorrichtung anbaubar.

Zur automatischen Steuerung der gesamten Anlage wird eine nicht dargestellte SPS-Steuerung (speicherprogrammierbare Steuerung mit Fuzzylogik-, Regler- und Rechnertunktion) verwendet. Diese berücksichtigt alle produktionsspezifischen Parameter zur Herstellung eines gut zusammenhaltenden und hochdichten Briketts 35.

Folgende produktionstechnischen und maschinenabhängigen Parameter werden von der SPS-Steuerung einzeln, zu mehreren oder insgesamt zu Steuerungs- und Regelzwecken herangezogen:
- Füllung des Aufgabebunkers 1 (max. und min. Füllhöhe)
- Füllung des Füllschachtes 6
- Drehzahl der Förderschnecken 4
- Temperatur des Gehäuses der Doppelschneckenpresse 8
- Temperatur des Stranges 27
- Druck der Preßschnecken 14
- Drehzahl des Hydromotors 9 des Schneckenantriebes
- Austrittsgeschwindigkeit des gepreßten Stranges 27
- Anpreßdruck des Brikettformers 29
- Länge des ausgepreßten Stranges 27
- Reversierung der Preßschnecken 14

Die fortlaufende Kontrolle der o.a. Meßwerte führt im Falle der Shredderleichtfraktion nach Ausnutzung der Regelmöglichkeiten zu einem hochdichten und fest zusammenhaltenden Brikett 35 ohne Bindemittel, das problemlos transport- und lagerfähig ist bei gleichzeitig geringstem Energieaufwand bei der Herstellung.

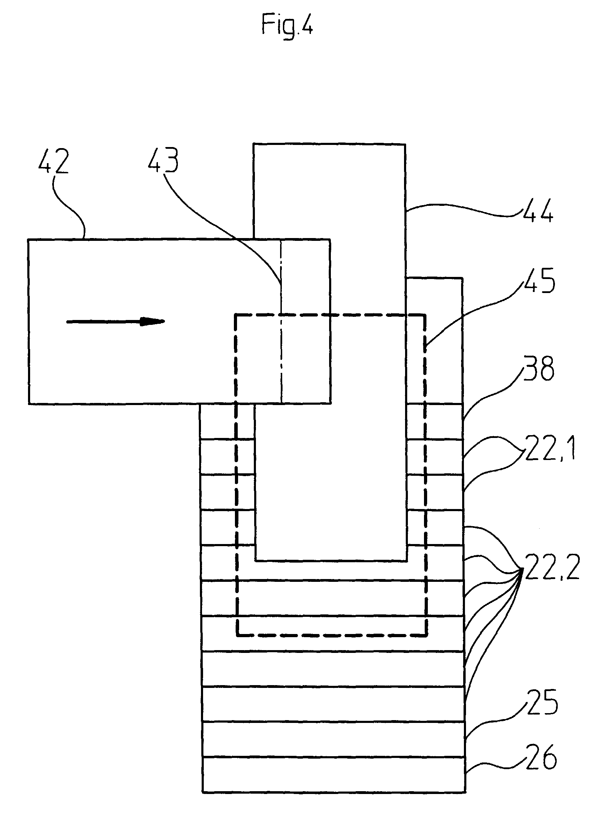

Gemäß Fig. 4 ist ein anderes, laufbandartiges Dosieraggregat 42 im Aufgabebunker 1 angedeutet, welches statt der Förderschnecken 4 Verteilerelemente 43 aufweist, von denen das Aufgabegut statt auf eine Vibrationsrinne 5 auf ein Zuführband 44 gelangt, wobei eine Absaugung 45 vorgesehen ist, die einen Bereich des Zuführbandes 44 und den aufgabeseitigen Bereich des Gehäuses abdeckt. Durch diese Kombination wird ein vorteilhafter Starteffekt zur Vorbereitung des optimalen Kompaktierungsvorganges, insbesondere hinsichtlich der Funktion Durchmischen und Trocknen, erzielt.

### Bezugszeichenliste

- 1: = Aufgabebunker
- 2: = Füllstandsmesser, oben
- 3: = Füllstandsmesser, unten
- 4: = Förderschnecken für Materialsaustrag
- 5: = Vibrationsrinne
- 6: = Füllschacht der Doppelschneckenpresse
- 7: = Füllstandsüberwachung
- 8: = Doppelschneckenpresse
- 9: = Antriebsaggregat, Hydromotor
- 10: = Hydraulikstation
- 11: = Leitung
- 12: = Leitung
- 13: = Verstellpumpen
- 14: = Preßschnecken
- 14.1: = hohles Basisteil
- 14.2: = Kopfteil
- 15: = Untersatz
- 16: = lange Schneckenwelle
- 17: = kurze Schneckenwelle
- 18: = Austragsende Doppelschneckenpresse
- 19: = Ritzel-Gehäuse
- 20: = Zahnradpaar
- 21: = Preßrichtung
- 22: = Platten
- 22.1: = aufgabeseitige Einfüllplatten
- 22.2: = Platten, die den Kompaktierungsraum des Gehäuses bilden
- 23: = Zuganker
- 24: = Austrittsbuchse
- 25: = Frontplatte
- 26: = Frontplatte
- 27: = gepreßter Strang
- 28: = Kühlstrecke
- 29: = Brikettformer
- 30: = untere Matrize
- 31: = obere Matrize
- 32: = Hydraulikzylinder für Brikettformer
- 33: = Pumpenantrieb für Brikettformer
- 35: = Brikett
- 36: = Transportband
- 37: = Container
- 38: = Abschlußplatte
- 39: = Gehäuse zum Brikettformer
- 42: = Dosieraggregat
- 43: = Verteilerelemente
- 44: = Zuführband
- 45: = Absaugung

## Patentansprüche

1. Zweiwellenkompaktverdichter in Form einer Extruderpresse oder sogenannten Doppelschneckenpresse, bestehend aus einem Gehäuse und darin laufenden, nebeneinanderliegenden, angetriebenen Schneckenwellen, einem materialeintrittseitigen Aufgabebunker und einem materialaustrittseitigen Brikettformer, zur Volumenreduzierung und hochverdichteten Kompaktierung von Abfällen unterschiedlicher Zusammensetzung zu brikettartigen Preßlingen, insbesondere zur Kompaktierung einer in Entstaubungsanlagen von Shredderanlagen anfallenden sogenannten Shredderleichtfraktion, **dadurch gekennzeichnet**, daß
- die Schneckenwellen (16, 17) aus mindestens je einem die Wellen aufnehmenden hohen Basisteil (14.1) und je einem die Stirnseiten der Wellen (16, 17) übergreifenden Kopfteil (14.2) bestehen,
- eine oder beide Schneckenwellen (16) von einem regel- und/oder reversierbaren Antriebsaggregat (9) angetrieben und über ein Zahnradpaar (20) mit einem Übersetzungsverhältnis 1 : 1 mit der gegenläufigen Welle (17) verbunden ist,
- diese kompakte Baueinheit der vorgenannten Merkmale funktionell durch einen Getriebeteil und einen Extruderteil derart getrennt ist, daß einerseits die Kraftübertragung von den Schneckenwellen (16, 17) zu den hohen Basisteilen (14.1) formschlüssig und von letzteren zu den Kopfteilen (14.2) kraft- oder formschlüssig erfolgt und andererseits die Schneckenwellen (16, 17) von dem materialverschleißenden Kompaktierungsvorgang fern gehalten sind und
- die Drehzahl der gegenläufigen Schneckenwellen (16,17) in Abhängigkeit von der Zusammensetzung des zu kompaktierenden Abfallmaterials zur Sicherstellung eines optimalen Kompaktierungsvorganges in dem physikalischen Zusammenhang Mitnahme und Durchmischung, Zerreißen, max. Druckaufbau zum Pressen mit Trocknung und zur Strangbildung für einen Zusammenhalt des Preßlings veränderbar ist.

2. Zweiwellenkompaktverdichter nach Anspruch 1, **dadurch gekennzeichnet,** daß das Gehäuse aus vertikal angeordneten Platten (22, 25, 26, 38) besteht, die als
- antriebsseitige Abschlußplatte (38),
- aufgabeseitige Einfüllplatten (22.1),
- den eigentlichen Kompaktierungsraum des Gehäuses umgebende Platten (22.2) und
- austrittseitige Frontplatten (25, 26)
gestaltet und mittels Zuganker (23) verbunden sind, und dabei besagte Platten (22, 25, 26, 38) je nach dem bestimmten Gehäusebereich, wie Bereich der Abschlußplatten (38), der Einfüllplatten (22.1), der Platten (22.2) und Frontplatten (25, 26) baugruppengleich wendbar, austauschbar und/oder ergänzbar sind.

3. Zweiwellenkompaktverdichter nach Anspruch 2, **dadurch gekennzeichnet,** daß die Dicke der Platten (22, 25, 26, 38) gleich oder kleiner ist als die Steigung der Schnecken des Basisteils (14.1) und des Kopfteils (14.2).

4. Zweiwellenkompaktverdichter nach Anspruch 2 oder 3, **dadurch gekennzeichnet,** daß die innere Ausformung der Platten (22, 25, 26, 38) der Kontur der Gehäuseeinbauten, wie z.B. der Schneckenwellen (16, 17) nachgebildet ist.

5. Zweiwellenkompaktverdichter nach Anspruch 2, **dadurch gekennzeichnet,** daß der Bereich der Materialaufgabe im Gehäuse durch Austausch der Einfüllplatten (22.1) veränderbar ist.

6. Zweiwellenkompaktverdichter nach Anspruch 2, **dadurch gekennzeichnet,** daß die Gehäuselänge durch Verringerung oder Vergrößerung der Anzahl der Platten (22, 25, 26, 38) veränderbar ist.

7. Zweiwellenkompaktverdichter nach Anspruch 2, **gekennzeichnet durch** eine Verlagerung der Austrittsöffnung des kompaktierten Stranges (27) im Verhältnis zu den Mittelpunkten der Schneckenwellen (16, 17) durch Auswechselung der Frontplatten (25, 26).

8. Zweiwellenkompaktverdichter nach einem der Ansprüche 2 bis 7, **dadurch gekennzeichnet,** daß die Platten (22, 25, 26, 38) nach der spezifischen Beanspruchung des jeweiligen Gehäusebereiches aus unterschiedlichen Werkstoffen bestehen.

9. Zweiwellenkompaktverdichter nach den Ansprüchen 2 bis 8, **dadurch gekennzeichnet**, daß die Zuganker (23) über Durchgangsbohrungen in den Platten (22, 25, 26) in die Abschlußplatte (38) eingeschraubt sind.

10. Zweiwellenkompaktverdichter nach Anspruch 2, **dadurch gekennzeichnet**, daß in den Frontplatten (25, 26) eine auswechselbare Austrittsbuchse (24) eingelassen ist.

11. Zweiwellenkompaktverdichter nach Anspruch 10, **dadurch gekennzeichnet**, daß Maß und/oder Form der Öffnung der Austrittsbuchse (24) frei wählbar sind.

12. Zweiwellenkompaktverdichter nach Anspruch 1, **dadurch gekennzeichnet,** daß das Gehäuse der Doppelschneckenpresse (8) entsprechend den Konturen der darin laufenden Schneckenwellen mit auswechselbaren Auskleidungen wie in Form je einer offenen Hülse versehen ist.

13. Zweiwellenkompaktverdichter nach Anspruch 1, **dadurch gekennzeichnet,** daß die Schnecken des Basisteils (14.1) und des Kopfteils (14.2) mehrgängig ausgeführt sind.

14. Zweiwellenkompaktverdichter nach Anspruch 1 und 13, **dadurch gekennzeichnet**, daß unterschiedliche Steigungen der Schnecken im Verhältnis von Vorder- zur Hinterflanke des jeweiligen Schneckenganges zwecks zunehmender Verringerung des Quetschspaltes zwischen den Gangwendeln in Richtung des Strangausstoßes vorgesehen sind.

15. Zweiwellenkompaktverdichter nach Anspruch 1, 13 und 14, **dadurch gekennzeichnet**, daß die Gangwendeln speziell wärmebehandelt oder beschichtet sind.

16. Zweiwellenkompaktverdichter nach Anspruch 1, **gekennzeichnet durch** die Verwendung eines Hydromotors (9) als Antrieb mit einer Drehzahlregelung über mindestens eine fremdansteuerbare Verstellpumpe (13) zur Sicherstellung des optimalen Kompaktierungsvorganges.

17. Zweiwellenkompaktverdichter nach Anspruch 1, **gekennzeichnet durch** einen Brikettformer (29) mit Verstellantrieb, vorzugsweise hydraulischem Zylinder-antrieb (32), außerhalb des Gehäuses im Anschluß an die Frontplatte (26) zur Erzeugung eines regelbaren Gegendruckes im Strang (27) für die Unterstützung des optimalen Kompaktierungsvorganges.

18. Zweiwellenkompaktverdichter nach Anspruch 17, **gekennzeichnet durch** einen separaten hydraulischen Pumpenantrieb (33), alternativ unter Zwischenschaltung eines Druckspeichers.

19. Zweiwellenkompaktverdichter nach Anspruch 1, **dadurch gekennzeichnet,** daß zur Vorbereitung des optimalen Kompaktierungsvorganges, insbesondere für den physikalischen Zusammenhang Durchmischen und Trocknung, der Aufgabebunker (1) eine Kombination von einem rechtwinklig zur Förderrichtung des aufzugebenden Abfallmaterials angeordneten, laufbandartigen Dosieraggregat (42) mit Verteilerelementen (43) und einem darunter liegenden Zuführband (44) sowie einer Absaugung (45), die einen Bereich des Zuführbandes (44) und den aufgabeseitigen Bereich des Gehäuses abdeckt, umfaßt.

20. Zweiwellenkompaktverdichter nach Anspruch 1, **dadurch gekennzeichnet,** daß für die Überwachung des Füllstandes im Aufgabebunker (1) und in einem Füllschacht (6) eine Förderschnecke (4) und eine Vibrationsrinne (5) vorgesehen sind.

21. Zweiwellenkompaktverdichter nach den Ansprüchen 1 bis 20, **dadurch gekennzeichnet,** daß eine sogenannte SPS-Steuerung mit den Funktionen
- Füllstandsanzeige im Aufgabebunker (1),
- Füllung des Gehäuses,
- Drehzahlregelung des Antriebs und Reversierung der Schneckenwellen (16, 17),
- Betriebstemperaturregelung des Gehäuses,
- Temperaturüberwachung des Stranges (27),
- Druckregelung der Schnecken,
- Austrittgeschwindigkeitsüberwachung des Stranges (27),
- Anpreßdruckregelung des Brikettformers (29) und/oder
- Ablängung und Einschaltung einer Trennvorrichtung des Stranges (27)
für die Sicherstellung des optimalen Kompaktierungsvorganges in dem jeweiligen physikalischen Zusammenhang vorgesehen ist.

## Claims

1. A two-shaft compressor in the form of an extruder press or a double-screw press consisting of a housing inside of which are adjacent, driven screw shafts, an inlet-side feed bin, and an outlet-side briquette former to reduce the volume and highly compact waste of different compositions into pressed bricks, especially to Compact the "light shredder fraction" that arises in the dust-removing systems of shredders, characterized in that:
- the screw shafts (16, 17) consist of at least one hollow base part (14.1) that receives the shaft, and a head part (14.2) that grips the head of the shaft (16, 17),
- one or both of the screw shafts (16) are driven by a control and/or reversible drive aggregate (9) and are connected via a pair of gears (20) with a transmission ratio of 1 : 1 to the counter-rotating shaft (17),
- this compact component with the cited features is functionally divided into a drive part and an extruder part in that the force is transmitted by a positive fit of the screw shafts (16, 17) to the hollow base parts (14.1), and force is transmitted from the latter to the head parts (14.2) by a positive fit or non-positive means; the screw shafts (16, 17) are removed from the material-wearing compacting process, and
- the speed of the counter-rotating screw shafts (16, 17) can be changed depending on the composition of the compacted waste material to ensure an optimum compacting process composed of the following physical elements: entrainment and mixture, shredding, build of maximum pressure to press, dry, and form a cohesive pressed cylinder.

2. A two-shaft compactor according to claim 1, characterized in that the housing consists of vertical plates (22,25,26,38) that comprise:
- a drive-side end plate (38),
- feed-side filling area plates (22.1),
- the plates surrounding the actual compacting area of the housing (22.2), and
- exit-side front plates (25, 26)
and are connected with tie rods (23); the cited plates (22, 25, 26, 38) can be turned, exchanged and/or supplemented as equivalent components depending on the specific housing area such as the end plates (38), filling area plates (22.1), plates (22.2) and front plates (25, 26).

3. A two-shaft compactor according to claim 2, characterized in that the thickness of the plates (22, 25, 26, 38) is the same or less than the pitch of the screws of the base part (14.1) and the head part (14.2).

4. A two-shaft compactor according to claims 2 or 3, characterized in that the inner deformation of the plates (22, 25, 26, 38) mimics the contour of the interior components of the housing such as the screw shafts (16, 17).

5. A two-shaft compactor according to claim 2, characterized in that the material feed area in the housing can be changed by exchanging the filling area plates (22.1).

6. A two-shaft compactor according to claim 2, characterized in that the housing length can be changed by reducing or increasing the number of plates (22, 25, 26, 38).

7. A two-shaft compactor according to claim 2, characterized in that the outlet opening for the compacted cylinder (27) is displaced in relationship to the midpoints of the screw shafts (16, 17) by exchanging the front plates (25, 26).

8. A two-shaft compactor according to one of claims 2-7, characterized in that the plates (22, 25, 26, 38) consist of different materials depending on the specific stress of the respecting housing area.

9. A two-shaft compactor according to claims 2-8, characterized in that the tie rods (23) are screwed to the end plate (38) by through-holes in the plates (22, 25, 26).

10. A two-shaft compactor according to claim 2, characterized in that an exchangeable outlet sleeve (24) is inserted in the front plates (25, 26).

11. A two-shaft compactor according to claim 10, characterized in that the dimensions and/or shape of the opening of the outlet sleeve (24) can be freely selected.

12. A two-shaft compactor according to claim 1, characterized in that the housing of the double-screw press (8) is provided with an exchangeable lining such as an open sleeve that corresponds to the contours of the screw shafts inside.

13. A two-shaft compactor according to claim 1, characterized in that the screws of the base part (14.1) and the head part (14.2) have several threads.

14. A two-shaft compactor according to claims 1 and 13, characterized in that different pitches of the screws are provided in relation to the front and rear flank of the respective screw thread so that the squeeze gap between the helical threads is increasingly reduced toward the pressed cylinder outlet.

15. A two-shaft compactor according to claims 1, 13 and 14, characterized in that the helical threads are specially heat-treated or coated.

16. A two-shaft compactor according to claim 1, characterized by the use of a hydromotor (9) as a drive with a speed regulator via at least one externally-controllable variable displacement pump (13) to ensure optimum compacting.

17. A two-shaft compactor according to claim 1, characterized by a briquette former (29) with an adjustable drive, preferably a hydraulic cylinder drive (32), outside of the housing following the front plate (26) to generate a controllable counter-pressure in the pressed cylinder (27) to support the optimum compacting process.

18. A two-shaft compactor according to claim 17, characterized by a separate hydraulic pump drive (33), alternately with an intermediate pressure tank.

19. A two-shaft Compactor according to claim 1, characterized in that the feed bin (1) consists of a combination of a conveyor-belt-like metering aggregate (42) at a right angle to the direction of conveyance of the fed waste material with distribution elements (43) and a feed belt (44) underneath, and a suction device (45) that covers an area of the feed belt (44) and the feed-side area of the housing to prepare from an optimized compacting process, especially for physically combining mixing and drying.

20. A two-shaft compactor according to claim 1, characterized in that a conveyor screw (4) and a vibrating channel (5) are provided to monitor the full level in the feed bin (1) and feed shaft (6).

21. A two-shaft compactor according to claims 1-20, characterized in that a programmable control is provided with the following functions:
- full level display in the feed hopper (1),
- filling the housing,
- speed regulation of the drive and reversing the screw shafts (16,17),
- operating temperature of the housing,
- temperature monitoring of the pressed cylinder (27),
- pressure regulation of the screws,
- exit speed monitoring of the pressed cylinder (27),
- Pressure control of the briquette former (29), and/or
- Cutting the pressed cylinder into lengths, and turning on the pressed cylinder (27) cutter
to ensure an optimum compacting process in the respective physical context.

## Revendications

1. Dispositif de densification compact à deux arbres, adoptant la forme d'une presse d'extrusion ou boudineuse à deux vis, comprenant une cage et des arbres de vis juxtaposés, entraînés et tournant dans celle-ci, un réservoir d'alimentation situé du côté où se fait l'introduction des matières, et un dispositif pour former des briquettes situé du côté de la sortie des matières, pour réduire le volume et compacter en les densifiant fortement des déchets de composition diverse, pour en former des lingots en forme de briquettes, en particulier pour densifier une fraction dite légère issue des installations de dépoussiérage de déchiqueteuses, caractérisé en ce que:
- les arbres de vis (16, 17) comprennent au moins chacun un élément de base creux (14.1) dans lequel sont logés les arbres et un élément supérieur (14.2) recouvrant les faces frontales des arbres (16, 17);
- un arbre de vis (16), ou les deux, sont entraînés par un groupe de réglage et/ou d'entraînement à marche réversible et sont raccordés par l'intermédiaire de deux pignons (20) à l'arbre (17) tournant en sens contraire avec un rapport de multiplication de 1 : 1;
- cette construction compacte des caractéristiques décrites est séparée fonctionnellement par une partie engrenages et une partie boudineuse, de telle sorte que, d'une part, la transmission d'efforts des arbres de vis (16, 17) aux éléments de base creux (14.1) se fait par engagement positif, et de ces derniers aux éléments supérieurs (14.2), par adhérence ou par engagement positif, et d'autre part, que les arbres de vis (16, 17) sont tenus à l'écart du processus de densification provoquant l'usure des matériaux, et
- la vitesse des arbres de vis (16, 17) tournant en sens opposé est variable en fonction de la composition des déchets à densifier, en vue d'assurer un processus de densification optimum dans le contexte physique entraînement et malaxage, déchiquetage, établissement de la pression maximum pour pressage avec séchage et pour la formation du boudin en vue de la cohésion du lingot.

2. Dispositif de densification compact à deux arbres selon la revendication 1, caractérisé en ce que la cage se compose de plaques (22, 25, 26, 28) disposées verticalement qui sont configurées comme:
- une plaque de finition (38) côté entrée,
- des plaques de remplissage (22.1) côté chargement,
- des plaques (22.2) entourant le compartiment de compactage proprement dit de la cage, et
- des plaques frontales (25, 26) situées côté sortie,
et sont reliées par des tirants d'ancrage (23), et en ce que les plaques (22, 25, 26, 38) peuvent être retournées, échangées et/ou remplacées en fonction d'une partie déterminée de la cage, telle que la partie des plaques de finition (38), des plaques de chargement (22.1), des plaques (22.2) et des plaques frontales (25, 26) à la manière d'un module de construction.

3. Dispositif de densification compact à deux arbres selon la revendication 2, caractérisé en ce que l'épaisseur des plaques (22, 25, 26, 38) est égale Ou inférieure au pas des vis de l'élément de base (14.1) et de l'élément supérieur (14.2).

4. Dispositif de densification compact à deux arbres selon la revendication 2 ou 3, caractérisé en ce que la forme intérieure des plaques (22, 25, 26, 38) épouse le contour des éléments incorporés dans la cage comme p.ex. des arbres de vis (16, 17).

5. Dispositif de densification compact à deux arbres selon la revendication 2, caractérisé en ce que la zone du chargement des matières dans la cage peut être modifiée par échange des plaques de chargement (22.1).

6. Dispositif de densification compact à deux arbres selon la revendication 2, caractérisé en ce que la longueur de la cage peut être modifiée en réduisant ou en augmentant le nombre des plaques (22, 25, 26, 38).

7. Dispositif de densification compact à deux arbres selon la revendication 2, caractérisé par un déplacement de l'orifice de sortie du boudin densifié (27) par rapport aux centres des arbres de vis (16, 17), par échange des plaques frontales (25, 26).

8. Dispositif de densification compact à deux arbres selon l'une des revendications 2 à 7, caractérisé en ce que les plaques (22, 25, 26, 38) sont fabriquées dans des matériaux différents selon la sollicitation spécifique de la partie concernée de la cage.

9. Dispositif de densification compact à deux arbres selon les revendications 2 à 8, caractérisé en ce que les tirants d'ancrage (23) sont vissés dans la plaque de finition (38) par des perçages débouchants ménagés dans les plaques (22, 25, 26).

10. Dispositif de densification compact à deux arbres selon la revendication 2, caractérisé en ce qu'une douille de sortie (24) interchangeable est emboîtée dans les plaques frontales (25, 26).

11. Dispositif de densification compact à deux arbres selon la revendication 10, caractérisé en ce que le calibre et/ou la forme de l'orifice de la douille de sortie (24) peuvent être sélectionnés librement.

12. Dispositif de densification compact à deux arbres selon la revendication 1, caractérise en ce que la cage de la boudineuse à deux Vis (8) est équipée de chemises interchangeables, telles qu'en forme de manchon ouvert, chacune, en fonction des contours des arbres de vis qui y tournent.

13. Dispositif de densification compact à deux arbres selon la revendication 1, caractérisé en ce que les vis de l'élément de base (14.1) et de l'élément supérieur (14.2) sont à plusieurs pas.

14. Dispositif de densification compact à deux arbres selon les revendications 1 et 13, caractérisé en ce qu'on a prévu différents pas pour les vis en fonction du flanc avant à arrière du pas de vis concerné, pour réduire de façon accrue la fente d'écrasement entre les spires du pas dans la direction de l'éjection du boudin.

15. Dispositif de densification compact à deux arbres selon les revendications 1, 13 et 14, caractérisé en ce que les spires du pas ont été traitées à la chaleur ou revêtues spécialement.

16. Dispositif de densification compact à deux arbres selon la revendication 1, caractérisé par l'utilisation d'un moteur hydraulique (9) comme dispositif d'entraînement avec un réglage de la vitesse par au moins une pompe à cylindrée variable (13) excitable extérieurement en vue d'assurer le processus de densification optimal.

17. Dispositif de densification compact à deux arbres selon la revendication 1, caractérisé par un dispositif pour former des briquettes (29) avec une commande de déplacement, de préférence une commande par vérin hydraulique (32) à l'extérieur de la cage, à la suite de la plaque avant (26), afin de générer une contre-pression réglable dans le boudin (27), pour renforcer le processus de densification optimum.

18. Dispositif de densification compact à deux arbres selon la revendication 17, caractérisé par une commande par pompe hydraulique séparée (33), éventuellement avec interposition d'un accumulateur de pression.

19. Dispositif de densification compact à deux arbres selon la revendication 1, caractérisé en ce que pour préparer le processus de densification optimum, en particulier pour le contexte physique du malaxage et du séchage, le réservoir d'alimentation (1) comprend un groupe de dosage (42) du type bande de roulement avec des éléments distributeurs (43), disposé à angle droit par rapport au sens du transport des déchets à charger, et une bande d'amenée (44) localisée en dessous de ce dernier, ainsi qu'un dispositif d'aspiration (45) qui recouvre une zone de la bande d'amenée (44) et la zone de la cage située côté alimentation.

20. Dispositif de densification compact à deux arbres selon la revendication 1, caractérisé en ce qu'on a prévu une vis de transport (4) et une goulotte vibrante (5) pour surveiller le niveau de remplissage du réservoir d'alimentation.

21. Dispositif de densification compact à deux arbres selon les revendications 1 à 20, caractérisé en ce qu'on a prévu une commande par programme enregistré comprenant les fonctions:
- affichage du niveau de remplissage du réservoir d'alimentation (1),
- remplissage de la cage,
- réglage de la vitesse du dispositif d'entraînement et renversement de marche des arbres de vis (16, 17),
- réglage de la température de service de la cage,
- surveillance de la température du boudin (27),
- réglage de la pression des vis,
- contrôle de la vitesse de sortie du boudin (27),
- réglage de la pression appliquée par le dispositif formateur de briquettes (29) et/ou
- tronçonnement et mise en route d'un dispositif de sectionnement du boudin (27),
en vue d'assurer le processus de densification optimum dans les contextes physiques concernés.
